Europäisches Patentamt

European Patent Office

Office européen des brevets

(11) Publication number: **0 207 343 B1**

# EUROPEAN PATENT SPECIFICATION

(45) Date of publication of patent specification: **26.08.92**  (51) Int. Cl.⁵: **G06F 3/00**

(21) Application number: **86108086.9**

(22) Date of filing: **13.06.86**

(54) **Image scanner interacting with a processor.**

(30) Priority: **05.07.85 JP 146919/85**

(43) Date of publication of application:
**07.01.87 Bulletin  87/02**

(45) Publication of the grant of the patent:
**26.08.92 Bulletin  92/35**

(84) Designated Contracting States:
**DE FR GB**

(56) References cited:
**DE-A- 3 342 004**

**COMPUTER DESIGN, vol. 16, no. 10, October 1977, pages 166,168; "Optical data acquisition system combines video and digital technologies"**

(73) Proprietor: **International Business Machines Corporation**
**Old Orchard Road**
**Armonk, N.Y. 10504(US)**

(72) Inventor: **Asada, Shigeki**
**12-4-103 2-ch. Nishikaigan Tsujidoh**
**Fujisawa-shi Kanagawa-ken(JP)**
Inventor: **Yanagisawa, Hiroshi**
**6-1-501 5-chome Isogo Isogoku**
**Yokohama-shi Kanagawa-ken(JP)**

(74) Representative: **Blutke, Klaus, Dipl.-Ing.**
**Schönaicher Strasse 220**
**W-7030 Böblingen(DE)**

## Description

The invention relates to a method of controlling an image scanner interacting with a processor, wherein a series of clock pulses is applied to a shift register in a sensor unit of an image scanner to transfer the digitized image data in the shift register to the processor.

Generally, inexpensive image scanners which scan and sense an image by causing relative movement between a sensor and the image to be sensed by a motor are limited in their memory size and in the data processing and data transfer rates of their processors, so that they accompany starts and stops in reading image data in order to avoid being affected by such limitations. The read image data is fetched from a CCD shift register consisting of a charge transfer device, more particularly a charge-coupled device (CCD), as video data. A line of video data is fetched from the CCD shift register using predetermined pulses.

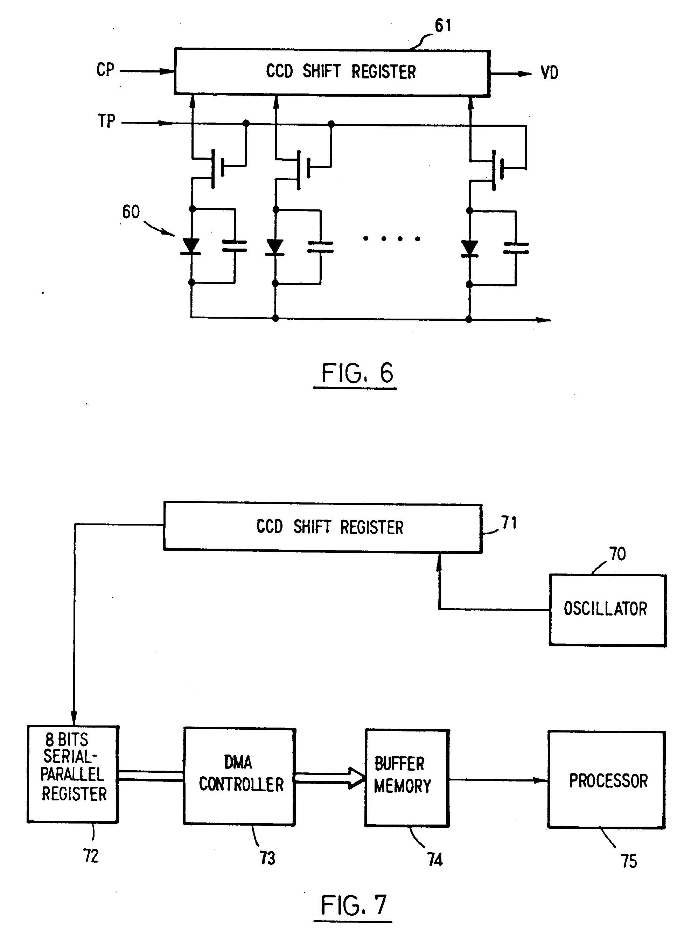

Figure 6 shows an example of the sensor unit for an image scanner. The sensor unit has an array of photodiodes 60 and a CCD shift register 61. Image data stored in the photodiode 60 is transferred to the CCD shift register 61 by a transfer pulse TP and fetched from the CCD shift register 61 as video data VD by a clock pulse CP.

Figure 7 shows a conventional image scanner control method. As video data is sent from a CCD shift register 71 to a buffer memory 74 through an 8-bit serial-parallel register 72 at regular intervals in response to predetermined clock pulses from an oscillator 70 operating at a constant frequency, a DMA (Direct Memory Access) controller 73 is required as hardware. In addition, the buffer memory 74 must be able to store at least two lines. A processor 75 reads and processes the video data stored in the buffer memory 74.

If the DMA controller is not engaged otherwise, it is used to read by means of a program loop. When such a program loop is employed, the processor is exclusively used to read the video data. The processor reads and processes video data stored in the buffer memory at times other than those used to read data.

As described, one conventional image scanner control method serves to read image data without direct participation of the processor and to store video data in the buffer memory by the DMA or the program loop method. Therefore, it is necessary to provide a DMA controller and a buffer memory in the image scanner, which increase the size and price of the image scanner.

Another method of controlling an image scanner is disclosed in COMPUTER DESIGN, vol. 16, no. 10, October 1977, pages 166 and 168, "Optical data acquisition system combines video and digital technologies" in which the digitizer does not require any kind of buffer storage between it and the computer. Image data can be digitized and consigned to computer storage automatically by a single command pulse from the computer, the data selection rate being programmed to be optimal to the absorption rate of the computer.

It is the object of the invention to provide an improved method of controlling an image scanner, without using conventional DMA or program loop methods, and which is used to reduce the processing load on the processor and to enable high-speed linear data compression.

This object is accomplished, according to the characterizing features of the main claim, by generating run-length values of the digitized data as it is read from the CCD shift register and supplying the values to the processor, thus freeing the processor itself from the additional task of determining the run-length values to be used in the data compression.

Further advantages of the invention are characterized in the subclaims.

To this end, the image scanner control method of the invention is designed to start applying clock pulses to a shift register in a sensor unit of the image scanner in synchronization with a read signal from a processor. As the video data can be fetched from the processor with the latter directly participating in the reading of image data, it is not necessary to store video data in the buffer memory, thus simplifying the hardware configuration.

However, such direct participation of the processor may have the following effect. If the processor is interrupted, reading of the video data is suppressed so that the processor read operation for the video data exceeds the predetermined scanning time before being completed. When this happens, the image scanner control method according to the invention stops the transfer of sense data for the next scanning line from a photosensor in a sensor unit to a shift register. After video data has been fetched from the shift register, the sense data for the next scanning line is again referred to.

For applying clock pulses to the shift register, a gate means, receiving clock pulses from an oscillator, is made conductive in synchronization with a read signal from the processor. A similar approach is used to start the application of clock pulses to the run length counter. The shift register preferably comprises a charge transfer device, and a photodiode is preferably connected in parallel to a capacitor to act as a photosensor. The application of clock pulses to the shift register and the run length counter is started by setting a latch means in response to a read signal from the processor and by making the gate means conductive by an output signal from the latch means. The application of the clock pulses to the shift register and the run length counter is stopped and the processor is interrupted by resetting the latch means when a change in the level of the image data is detected, an output signal from the latch means being subsequently supplied to the gate means and the processor.

For a better understanding of the present invention and its advantages and features attention is drawn to the description and the accompanying drawings. The scope of the invention may be seen from the attached claims.

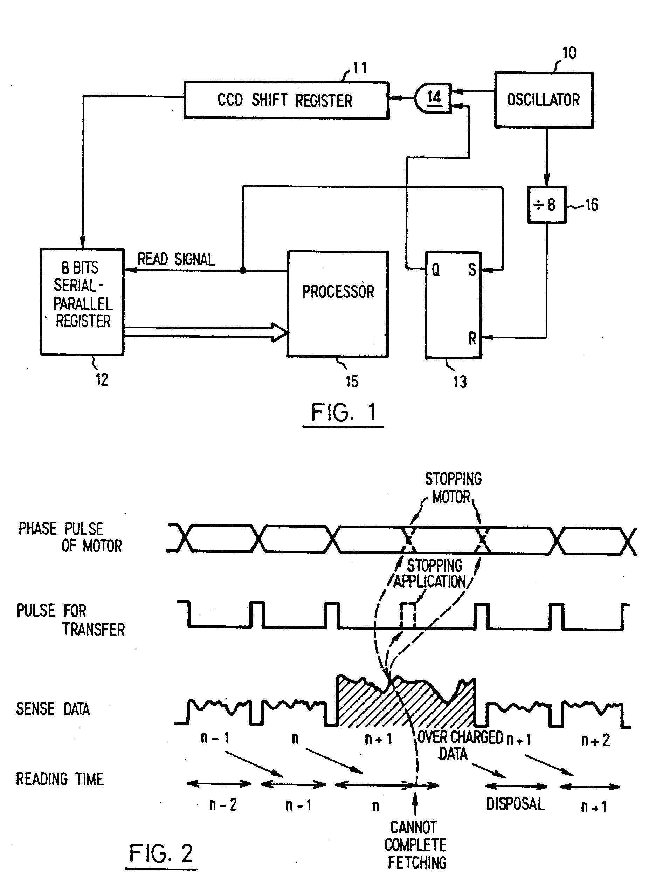

Figure 1 shows one part of the image scanner control method according to the invention. Clock pulses to a CCD shift register 11 are generated in synchronisation with a read signal from a processor 15. This enables the processor to read video data in response to a read command. Thus, the image scanner does not require hardware, as, for example, a DMA controller and a buffer memory.

In Figure 1, the clock pulses are supplied by an oscillator 10, operating at a constant frequency, to the CCD shift register 11 by 8 clocks in synchronization with the read signal from the processor 15. A latch means 13 is set by the read signal from the processor 15 to make a gate means 14 conductive. After 8 clock pulses have been supplied to the CCD shift register, a signal is generated from a counter 16 to reset the latch means 13. This makes the gate means 14 non-conductive, and the supply of clock pulses to the CCD shift register is stopped until the next read signal is emitted by the processor 15.

As previously described, the video data is directly read by the processor through an 8-bit serial-parallel register 12. This cycle is a data read cycle.

The processor may be interrupted to effectively utilize its processing capability and to limit the dedicated use of program control as little as possible. If the processor is interrupted, it suppresses the reading of video data. This significantly delays the video data read operation for a particular line within a predetermined scanning time. In such a case, the transfer pulse is stopped and the data read cycle is continued until the video data for one line has been read. When the transfer clock is stopped, the photodiode becomes overcharged and the sense data no longer properly represents the image being scanned. It is necessary to dispose of the sense data after transferring it to the CCD shift register and fetching it as video data from the CCD shift register, and to again take data for the same line.

Figure 2 shows an example of where the processor fails to read all video data for the n-th line. In such a case, the transfer pulse for the (n + 1)-th line is stopped. A phase pulse for a motor causes no change, so that data for the (n + 1)-th line may again be taken.

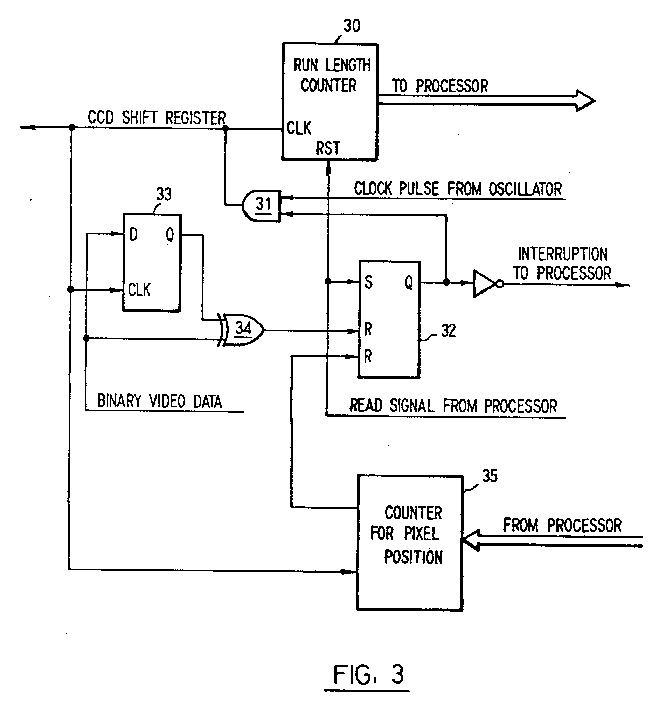

Figure 3 shows another part of the image scanner control method according to the invention. Only by adding a hardware configuration as shown in Figure 3, is it possible to use a simple hardware configuration. Such a configuration does not impose much load on the processor, it affords high-speed linear data compression (run length method/data compression), and processes video data by means of software. The processor only receives run length values and is not used to determine such values.

The hardware configuration shown in Figure 3 consists of a run length counter 30, a gate means 31, a latch means 32, a pixel change detecting means 33, a gate means 34, and a pixel position counter 35.

The hardware configuration of Figure 3 is described below. First, read signals from the processor set the latch means 32 and reset the run length counter 30. After the latch means 32 has been set, its output signal makes the gate means 31 conductive, allowing clock pulses from the oscillator to pass and to be applied to the CCD shift register in the sensor unit and the run length counter 30. The application of clock pulses to the CCD shift register causes the CCD shift register to output the video data. The binary video data is based on the output signals of the CCD shift register supplied to the pixel change detecting means 33. If the pixel change detecting means 33 detects a change in the binary level, for example, from white to black or from black to white, it outputs a signal to its gate means 34 to reset the latch means 32. After the latch means 32 has been reset, its output signal prevents oscillator clocks from passing by making the gate means 31 non-conductive to stop the application of clock pulses to the CCD shift register and the run length counter 30 and to interrupt the processor. At that time, the processor receives the value of the run length counter 30 to perform a processing operation, such as data compression. When the processor becomes available after completion of that operation, it again supplies a read signal to the latch means 32 and the run length counter 30 to set the latch means 32 and to reset the run length counter 30. Setting of the latch means 32 causes the clock pulses to be reapplied to the CCD shift register and the run length counter 30.

The pixel position counter 35 is used for partial scanning, etc., because it indicates from which pixel on a line the video data is read. The counter 35 also indicates when one line of video data has been read.

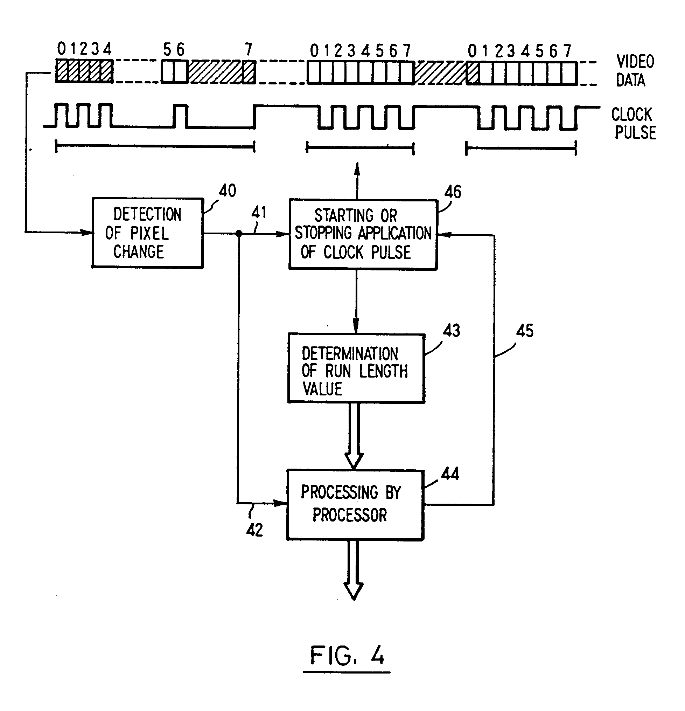

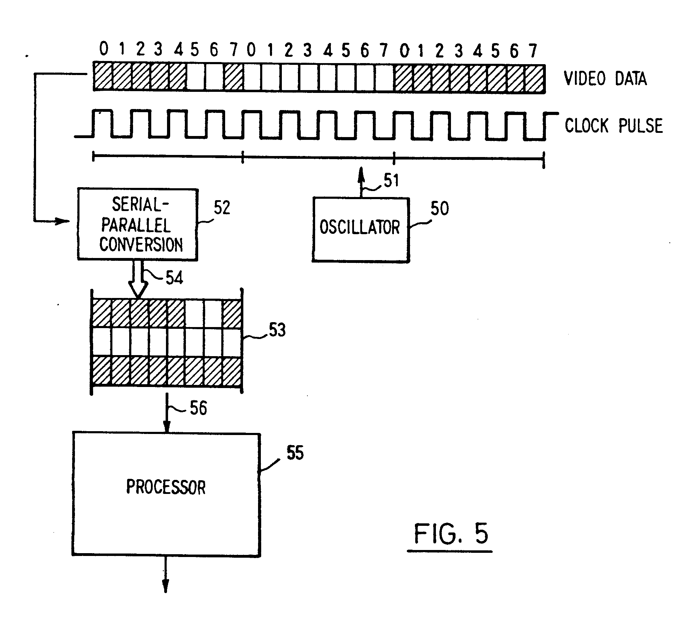

Figures 4 and 5 show a method according to the invention and a conventional method, respectively, of performing linear data compression.

According to the inventive method shown in Figure 4, the clock pulses for the CCD shift register are applied in synchronization with a read signal from the processor, so that they are not constantly active as with the conventional method of Figure 5. The CCD shift register operates at the high and the low level of the clock pulses. As in the video data (0th to 7th bit from the left) black continues from the 0th to the 4th bit, and the clock pulses continue to be applied. Transition to white at the 5th bit is detected (40), followed by stopping requests for (41), and application of (46), clock pulses and by interrupting the processor (42). As a run length value is determined at that time (43), the processor receives that value for processing (44). When the processor becomes available after completion of processing, it supplies the read signal (45) to restart the application of clock pulses (46). The application of the clock pulses is slow in the 5th to 6th bit from the left, because the processor performs processing operations by using the value of the run length counter between the suppression and restart of clock pulse application. This also applies to other regions in which the clock pulses are slow.

With the conventional method shown in Figure 5, clock pulses (51) are constantly applied to the CCD shift register by an oscillator 50, the video data output from the CCD shift register being serial-parallel converted (52) before being stored in a buffer memory 53 by the DMA or the program loop method (54). Then, the video data stored in the buffer memory 53 is read by the processor (56) which finds a run length value by checking the read video data one by one, and performs data compression.

## Claims

1. A method of controlling an image scanner interacting with a processor (15), wherein a series of clock pulses is applied to a shift register (11) in a sensor unit of an image scanner to transfer the digitized image data in the shift register to the processor,
characterized by the steps of
resetting a run length counter (30) by a read signal from the processor (15) and starting to apply said clock pulses to said shift register (11) and to said run length counter (30);
detecting a change in the binary level of said digitized image data as it is transferred;
stopping the application of said clock pulses to said shift register (11) and to said run length counter (30);
supplying the value of said run length counter to said processor for compression of the image data on the basis of this value and the change in the binary level of the image data, and causing said processor to output a new read signal when said processor becomes available after compression of the image data so as to achieve synchronous interaction of said processor and image scanner.

2. The method as claimed in claim 1, wherein the application of said series of clock pulses to said shift register (11) is started by making a gate (14), receiving clock pulses from an oscillator (10), conductive by said read signals.

3. The method as claimed in claim 1 or 2, wherein said shift register (11) consists of a charge transfer device.

4. The method as claimed in any one of the claims 1 to 3,
characterized by the steps of
stopping the transfer of sensed image data of the next scanning line from a photosensor to said shift register (11) when said processor (15) is interrupted for another operation; and
again taking sensed data.

5. The method as claimed in claim 4, wherein a photodiode connected in parallel to a capacitor is used as said photosensor.

6. The method as claimed in claim 1, wherein the application of said clock pulses to said shift register (11) and said run length counter (30) is started by setting a latch (32) by said read signal and making said gate (31) conductive by an output signal from said latch (32).

7. The method as claimed in claim 6, wherein the application of said clock pulses to said shift register (11) and said run length counter (30) is stopped and said processor (15) is interrupted by resetting said latch (32) when said change in the binary level of the image data is detected, an output signal from said latch (32) being subsequently supplied to said gate (31) and said processor (15).

## Patentansprüche

1. Verfahren zur Steuerung eines mit einem Prozessor (15) zusammenarbeitenden Bildabtasters, bei welchem eine Taktpulsfolge an ein in einer Sensor-Einheit des Bildabtasters befindliches Schieberegister (11) angelegt wird, um digitalisierte Bilddaten des Schieberegisters an den Prozessor zu übertragen, gekennzeichnet durch die Verfahrensschritte:
Rücksetzen eines Längenzählers (30) durch ein Lesesignal des Prozessors (15) und Starten der an das Schieberegister (11) und den Längenzähler (30) anzulegenden Taktpulse;

Anzeigen eines Wechsels des Binärstatus der übertragenen digitalisierten Bilddaten;

Anhalten der an das Schieberegister (11) und den Längenzähler (30) angelegten Taktpulse;

Übertragung des Wertes des Längenzählers zum Prozessor für die Kompression der Bilddaten auf der Grundlage dieses Wertes und des Wechsels des Binärstatus der Bilddaten, und

Ausgeben eines neuen Lesesignales durch den Prozessor, wenn dieser nach der Kompression der Bilddaten für das Zusammenarbeiten mit dem Bildabtaster wieder zur Verfügung steht.

2. Verfahren nach Anspruch 1, bei dem das Anlegen der Taktpulsfolge an das Schieberegister (11) durch eine Torschaltung (14) gestartet wird, welche Taktpulse von einem Oszillator (10) empfängt und durch die Lesesignale leitend geschaltet wird.

3. Verfahren nach Anspruch 1 oder 2, bei dem das Schieberegister (11) aus einem Ladungsverschiebeelement besteht.

4. Verfahren nach einem der Ansprüche 1 bis 3, gekennzeichnet durch die Verfahrensschritte: Abstoppen der Übertragung der abgetasteten Bilddaten der nächsten Abtastzeile von einem Photosensor zum Schieberegister (11), wenn der Prozessor-Lauf (15) zur Durchführung einer anderen Operation unterbrochen wird; und ein erneutes Aufnehmen der Abtast-Daten.

5. Verfahren nach Anspruch 4, bei dem eine prallel zu einer Kapazität geschaltete Photodiode als Prozessor benutzt wird.

6. Verfahren nach Anspruch 1, bei dem das Anlegen der Taktpulse an das Schieberegister (11) und den Längenzähler (30) gestartet wird durch Setzen einer Verriegelungsschaltung (32) durch das Lesesignal und durch Leitendschalten der Torschaltung (31) durch ein Ausgangssignal dieser Verriegelungsschaltung (32).

7. Verfahren nach Anspruch 6, in dem das Anlegen der Taktpulse an das Schieberegister (11) und den Längenzähler (30) gestoppt und der Prozessor-Lauf (15) unterbrochen wird durch Rücksetzen der Verriegelungsschaltung (32), wenn ein Wechsel im Binärstatus der Bilddaten angezeigt wird, wobei anschließend ein Ausgangssignal von der Verriegelungsschaltung (32) an die Torschaltung (31) und den Prozessor (15) angelegt wird.

## Revendications

1. Méthode pour la commande d'un capteur d'image agissant avec un processeur (15), dans laquelle une série d'impulsions d'horloge est appliquée à un registre à décalage (11) dans une unité de détection d'un capteur d'image afin de transférer les données d'image numérisées dans le registre à décalage au processeur,

caractérisée par les étapes de

remettre à zéro un compteur de longueurs de bloc (30) par un signal de lecture provenant du processeur (15) et commencer à appliquer lesdites impulsions d'horloge audit registre à décalage (11) et audit compteur de longueurs de bloc (30);

détecter un changement du niveau binaire desdites données d'image numérisées lors de leur transfert;

arrêter l'application desdites impulsions d'horloge audit registre à décalage (11) et audit compteur de longueurs de bloc (30);

fournir la valeur dudit compteur de longueurs de bloc audit processeur pour la compression des données d'image sur la base de cette valeur et du changement du niveau binaire des données d'image, et

permettre audit processeur d'envoyer en sortie un nouveau signal de lecture lorsque ledit processeur devient disponible après compression des données d'image de manière à accomplir l'interaction desdits processeur et capteur d'image.

2. Méthode selon la revendication 1, dans laquelle l'application de ladite série d'impulsions d'horloge audit registre à décalage (11) est commencée en rendant une porte (14), qui reçoit les impulsions d'horloge en provenance d'un oscillateur (10), conductrice par lesdits signaux de lecture.

3. Méthode selon les revendications 1 ou 2, dans laquelle le registre à décalage (11) est un dispositif à transfert de charge.

4. Méthode selon l'une quelconque des revendications 1 à 3,

caractérisée par les étapes de

arrêter le transfert des données d'image détectées de la ligne de balayage suivante depuis un photodétecteur jusqu'audit registre à décalage (11) lorsque ledit processeur (15) est interrompu pour une autre opération; et

prendre à nouveau les données détectées.

5. Méthode selon la revendication 4, dans laquelle une photodiode connectée en parallèle à un condensateur est utilisée comme étant ledit photodétecteur.

6. Méthode selon la revendication 1, dans laquelle l'application desdites impulsions d'horloge audit registre à décalage (11) et audit compteur de longueurs de bloc (30) est commencée en enclenchant une bascule (32) par ledit signal de lecture et en rendant ladite porte (31) conductrice par un signal de sortie provenant de ladite bascule (32).

7. Méthode selon la revendication 6, dans laquelle l'application desdites impulsions d'horloge audit registre à décalage (11) et audit compteur de longueurs de bloc (30) est arrêtée et ledit processeur (15) est interrompu en restaurant ladite bascule (32) lorsqu'est détecté ledit changement du niveau binaire des données d'image, un signal de sortie provenant de ladite bascule (32) étant ensuite fourni à ladite porte (31) et audit processeur (15).

FIG. 1

FIG. 2

FIG. 3

FIG. 4

FIG. 5

FIG. 6

FIG. 7